Europäisches Patentamt

(19) European Patent Office

Office européen des brevets

(11) EP 0 614 853 B1

## (12) EUROPEAN PATENT SPECIFICATION

(45) Date of publication and mention
of the grant of the patent:
**21.04.1999 Bulletin 1999/16**

(51) Int. Cl.⁶: **C01B 39/04**

(21) Application number: **94300760.9**

(22) Date of filing: **02.02.1994**

(54) **Method of producing zeolite beta**

Methode zur Herstellung von Beta-Zeolith

Méthode pour la production de bêta-zéloite

(84) Designated Contracting States:
**DE FR NL**

(30) Priority: **02.02.1993 JP 36246/93**

(43) Date of publication of application:
**14.09.1994 Bulletin 1994/37**

(73) Proprietor: **TOSOH CORPORATION**
**Yamaguchi-ken 746 (JP)**

(72) Inventors:
• **Inoue, Takahiko**
**Tokuyama-shi, Yamaguchi-ken (JP)**

• **Watanabe, Hiroshi**
**Shinnanyo-shi, Yamaguchi-ken (JP)**

(74) Representative:
**Kearney, Kevin David Nicholas et al**
**KILBURN & STRODE**
**20 Red Lion Street**
**London, WC1R 4PJ (GB)**

(56) References cited:
**EP-A- 0 164 939**        **EP-A- 0 187 522**
**EP-A- 0 306 181**

## Description

### BACKGROUND OF THE INVENTION

The present invention relates to a production method for for zeolite β useful as an adsorbent or catalyst.

Zeolite β is a substance presented in the specification of USP 3,308,069 for the first time. The feature of the synthetic method disclosed in that patent is to coexist (contact) tetraethylammonium (R) ions with silica source, alumina source, alkali source and water at a molar ratio of $R_2O/SiO_2$ of not less than 0.15:1. However, the tetraethylammonium compound is very unstable and expensive.

Japanese Unexamined Patent Publication No. Sho 61-281015 shows that the synthesis of zeolite β is possible even if tetraethylammonium ions are used at a $R_2O/SiO_2$ molar ratio as low as 0.01:1 to 0.1:1. However, if attempting to synthesize zeolite β in a system containing such a small quantity of tetraethylammonium ions, then it may take 6 days for crystallisation period, even if crystallizing at 150°C in the presence of seed crystal.

On the other hand, M.A. Camblor et al produced zeolite β within 30 hours at 135°C as reported in ZEOLITES, 1991, Vol. 11, p. 202 and p. 792, using amorphous silica, 40 % aqueous solution of tetraethylammonium hydroxide, sodium aluminate, aluminum, sodium hydroxide, potassium hydroxide, etc.

Moreover, attempts to produce zeolite β using other organic compounds in place of tetraethylammonium ions are proposed in Japanese Unexamined Patent Publication No. Sho 60-235714 and No. Sho 60-235715. However, all the substances used in these proposals are special organic compounds, which are difficult to obtain.

The purpose of the invention is to provide a method wherein lower amounts of tetraethylammonium compound can be used, only common raw materials are necessary as the raw materials other than the tetraethylammonium compound for the synthesis of zeolite, and yet zeolite β can be produced in short time under mild conditions.

### SUMMARY OF THE INVENTION

According to the present invention a method for producing zeolite β comprises the steps of contacting an aqueous solution of alkali metal silicate and an aqueous solution containing aluminium at a fixed ratio thereof under stirring, under conditions of temperature of 0 to 55°C and pH of 5 to 9, separating granular amorphous aluminosilicate having composition molar ratios of ingredients as oxides in the following ranges:

$SiO_2/Al_2O_3$ 10 ~ 200 (10:1 to 200:1) and
$M_2O/Al_2O_3$ 0.8 ~ 1.2 (0.8:1 to 1.2:1)

(wherein M means an alkali metal), and contacting said granular amorphous aluminosilicate with alkali metal hydroxide, tetraethylammonium compound and water at molar ratios as oxide in the range of:

$SiO_2/Al_2O_3$ 10 ~ 200 (10:1 to 200:1),
$M_2O/SiO_2$ 0.01 ~ 1 (0.01:1 to 1:1)
$H_2O/SiO_2$ 8 ~ 30 (8:1 to 30:1)
$R_2O/SiO_2$ 0.05 ~ 0.7 (0.05:1 to 0.7:1)

(wherein R means tetraethylammonium), for 24 to 120 hours at 70 to 160°C to crystallize out the said zeolite β.

The contacting of the aqueous solution of alkali metal silicate and aqueous solution containing aluminium may be done by concurrently and continuously feeding them at a fixed ratio so that the average retention time is 3 to 120 minutes and then discharging the reaction slurry at a fixed ratio. Alternatively the contacting may be done by concurrently and continuously feeding them over 5 or more than 5 minutes and separating granular amorphous aluminium silicate obtained through the reaction.

### BRIEF DESCRIPTION OF THE DRAWING

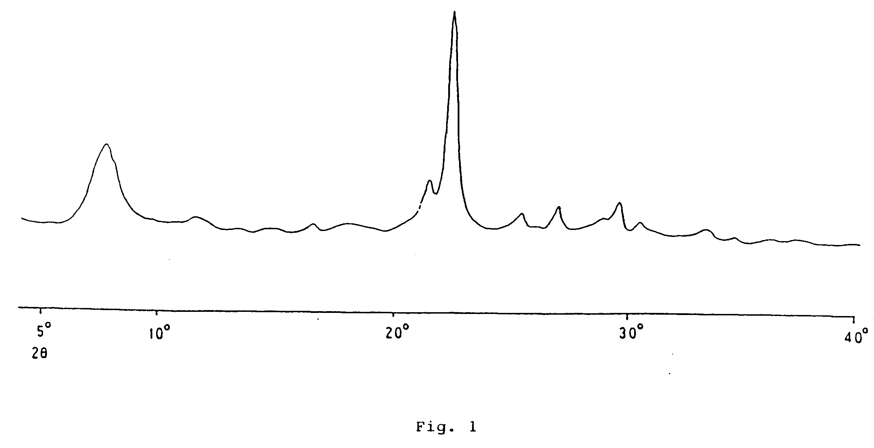

Fig. 1 is an X-ray diffraction diagram of zeolite β obtained in Example 1 by the use of Cu-$K_\alpha$ line.

### DETAILED DESCRIPTION OF THE INVENTION

Details of the invention will now be given.

Aqueous solutions of sodium silicate, potassium silicate, lithium silicate, and an aqueous solution made by dis-

2

solving silicic acid with alkali can be used as the aqueous solution of alkali metal silicate. Aqueous solutions of sodium aluminate, potassium aluminate, aluminum chloride, aluminum sulfate, aluminum nitrate, and an aqueous solution made by dissolving aluminum hydroxide or aluminum oxide with mineral acid can be used as the aqueous solution containing aluminum. The concentration thereof is not subject to any particular restriction and too dilute concentration only leads to poor productivity.

The pH value of reaction slurry in the reaction system should be kept in the range 5 to 9, preferably 6 to 8. If the pH value is out of this range a pasty slurry is produced and poor dewatering thereof renders it difficult to keep the $H_2O/SiO_2$ molar ratio of the mixture of raw materials in the crystallization process to not more than 30 (30:1). It is desirable to maintain the pH value constant within this range. When a desired pH value cannot be obtained only by use of both said aqueous solutions, then it may be recommendable to directly feed mineral acids such as hydrochloric acid and sulfuric acid or alkalis such as an aqueous solution of sodium hydroxide in addition to both the said aqueous solutions to the reaction system or to add them to the said aqueous solutions of raw materials to maintain the pH value of the reaction system in the range 5 to 9.

The feature of the invention lies in the compositional uniformity of the granular amorphous aluminosilicate to be submitted to the crystallization. Namely, the A1 atoms of granular amorphous aluminosilicate are scattered uniformly by a unit of oxide and, for this reason, it appears that the regular arrangement of atoms necessary on the crystallization of zeolite is made easy. If one attempts to crystallize a material poor in this uniformity of composition, it will be difficult to synthesize high-purity β zeolite due to the coproduction of impurities.

The raw materials of the granular amorphous aluminosilicate are the said aqueous solution of alkali metal silicate, aqueous solution containing aluminium and acid or alkali for pH adjustment which is used if necessary from which the granular amorphous aluminosilicate having a composition ratio of

$SiO_2/A1_2O_3$ 10 ~ 200 and
$M_2O/A1_2O_3$ 0.8 ~ 1.2

as expressed in terms of molar ratio of oxide can be obtained by controlling the feeding ratio of said aqueous solution of alkali metal silicate to said aqueous solution containing aluminium at a proportion of 10-200 as expressed in terms of conversion molar ratio of $SiO_2/A1_2O_3$. If the molar ratio of each oxide does not fall into this range, zeolite β having high purity cannot be produced).

Both said aqueous solutions should be fed concurrently and continuously under stirring to react. If even one of these conditions is missing, uniform granular amorphous aluminosilicate with said composition will not be obtained, resulting in the incapability of synthesizing high-purity β zeolite. As detailed examples of this reaction, either fully continuous mode wherein reaction is conducted while discharging the reaction slurry as the case of over-flow type, or batchwise continuous mode wherein reaction is conducted without discharging the reaction slurry can be adopted.

In either case, the reaction temperature should be 0 to 55°C, preferably 25 to 50°C. Also, the average retention time in the reactor in the case of said fully continuous mode should be 3 to 120 minutes, preferably 3 to 60 minutes and the raw material-feeding time in the case of batchwise continuous mode should be not shorter than 5 minutes, preferably 30 to 120 minutes.

The reaction temperature is primarily a factor determining the reactivity of the amorphous aluminosilicate obtained. With an increase in reaction temperature, the amorphous aluminosilicate obtained becomes densified leading to poor reactivity. In the case of granular amorphous aluminosilicate obtained under condition of reaction temperature exceeding 55°C, the regions of $M_2O/SiO_2$ molar ratio and $SiO_2/Al_2O_3$ molar ratio, where zeolite β is produced, become very narrow, and, even if the synthesis may still be possible in these narrow production regions, 160 hours or more become necessary for the crystallization time leading to remarkably decreased productivity. Also, as a means to shorten the crystallization time, it is possible to raise the crystallization temperature. However, the tetraethylammonium ion to be used as an organic mineralizer is a decomposable substance; for example, when the crystallization of zeolite β is performed at 160°C, the inner pressure of the autoclave reaches 35 kgf/cm² or higher requiring excessive investment for the installation. On the other hand, if the reaction temperature is too low, homogeneous phase compound of granular amorphous aluminosilicate becomes hard to obtain. Namely, the amorphous aluminosilicate allowed to deposit at such low temperature may have high reactivity, but it is pasty and has poor dewatering property, hence it becomes difficult to make the $H_2O/SiO_2$ molar ratio of the mixture of raw materials in the crystallization process not more than 30, resulting in that the productivity cannot help decreasing remarkably low. From such reasons, the reaction temperature should be 0°C or higher and is particularly preferable to be 25°C or higher. Moreover, for reacting at below 25°C, a cooling equipment of reactor is required.

The reaction time is primarily a factor determining the state of the particles of amorphous aluminosilicate. If the reaction time is too short as is the case when the average retention time in the said fully continuous mode is shorter than 3 minutes, or the case when the raw material-feeding time in the batchwise continuous made is shorter than 5 minutes, then the proportion of fine particles with diameter smaller than 1 μ (micrometre) will increase, the viscosity of the slurry obtained will increase, the loading in the filtration and washing processes will increase abruptly to remarkably decrease the production efficiency and further the concentration of solids in the crystallization process will decrease as well, ending up to aggravate the overall production efficiency of zeolite $\beta$. However, even if the average retention time may be made to be longer than 120 minutes in the case of fully continuous mode, additional improvement in the particle size of amorphous aluminosilicate cannot be expected, which is nothing but enlarging the reactor more than necessity to decrease the producibility. Usually, the average retention time is desirably to be less than 60 minutes.

With the granular amorphous aluminosilicate obtained in the way as described above, alkali metal hydroxide, tetraethylammonium compound and water are mixed to prepare a mixture of raw materials. The composition of the mixture of raw materials at this time should be

| | |
|---|---|
| $SiO_2/Al_2O_3$ | $10 \sim 200$, |
| $M_2O/SiO_2$ | $0.01 \sim 1$, |
| $H_2O/SiO_2$ | $8 \sim 30$ and |
| $R_2O/SiO_2$ | $0.05 \sim 0.7$ |

as expressed in terms of molar ratio of oxide.

As the alkali metal hydroxides, sodium hydroxide, potassium hydroxide and mixtures thereof are suitable.

The $SiO/Al_2O_3$ molar ratio of the mixture of raw materials should be 10 to 200 and $M_2O/SiO_2$ molar ratio 0.01 to 1. If either of these conditions are not satisfied, then high-purity zeolite $\beta$ cannot be obtained. Moreover, the $SiO_2/Al_2O_3$ molar ratio of zeolite $\beta$ produced is determined by the $SiO_2/Al_2O_3$ molar ratio and $M_2O/SiO_2$ molar ratio of the mixture of raw materials. Furthermore, even if the $M_2O/SiO_2$ molar ratio of the mixture of raw materials may be constant, the crystal size of zeolite $\beta$ and the $SiO_2/Al_2O_3$ molar ratio thereof can be microadjusted by the ratio of alkali metal or the crystallization temperature. For example, if the $SiO_2/Al_2O_3$ molar ratio of the mixture of raw materials is kept constant and the $M_2O/SiO_2$ molar ratio is made higher, then the $SiO_2/Al_2O_3$ molar ratio of zeolite $\beta$ becomes lower. Also, even if the $M_2O/SiO_2$ molar ratio may be constant, the crystal size of zeolite $\beta$ becomes larger if making, for example, the $K_2O/(K_2O + Na_2O)$ molar ratio higher.

If the $R_2O/SiO_2$ molar ratio is under 0.05, the synthesis of zeolite $\beta$ is possible, but the crystallization velocity ends up decreasing remarkably. No shortening effect on crystallization time can be recognized when the ratio exceeds 0.7.

Water is not an important factor as to whether zeolite $\beta$ is produced or not. However, as the $H_2O/SiO_2$ molar ratio becomes higher, the concentration of solids in the slurry decreases leading to decreased yield of zeolite $\beta$ per unit weight of slurry. On the other hand, if the ratio is too low, the stirring of the slurry of the mixture of raw materials will become difficult.

If zeolite $\beta$ is added to the mixture of raw materials as seed crystals, then the control of the crystal diameter of zeolite $\beta$ produced becomes easy and the crystallization time is shortened. The addition level of seed crystals to be present in the mixture of raw materials is desirably within the range from 0.01 to 10 wt. %, preferably from 0.05 to 1 wt. % to the raw materials on dry basis. If the addition of seed crystals is less than 0.01 wt. %, the addition effect thereof will not be seen sufficiently. If the seed crystals are added in an amount more than 10 wt %, no significant improvement effect on the control of crystal diameter and the shortening of synthesis time can be recognized. The crystal diameter of zeolite $\beta$ to be used as seed crystals is desirably around 0.5 to 1 $\mu$ (micrometers) and each crystal is desirably in the dispersed state. When only aggregates of crystals can be prepared, it is effective to use them after pulverizing e.g. in a ball mill. Although the $SiO_2/Al_2O_3$ molar ratio of zeolite $\beta$ to be used as seed crystals is not an important factor, if using crystals with $SiO_2/Al_2O_3$ molar ratio which is approximately the same as that of the zeolite $\beta$ to be produced, then zeolite $\beta$ with uniform $SiO_2/Al_2O_3$ molar ratio can be obtained as a product. The addition of seed crystals is only necessary to use a method of uniformly dispersing them into the mixture of raw materials, and, practically, the seed crystals may be added into the mixture of raw materials and mixed thoroughly by stirring.

The crystallization is performed in an autoclave under conditions of 70 to 160°C and 24 to 120 hours. The crystallization is possible both in stationary state and in stirring state. Industrially, crystallization under stirring is desirable from the point of view of heat transfer. The stirring intensity at the time of performing the crystallization under stirring is only necessary to be sufficient to prevent sedimenting of the solids in the mixture of raw materials and requires no excessive stirring.

After completion of crystallization, zeolite $\beta$ is separated from the slurry, washed to remove surplus alkali attached to and remaining on the crystals, and then dried, thereby obtaining high-purity zeolite $\beta$.

Zeolite $\beta$ obtained in the way described above may be subjected to the calcination, ion-exchange, etc., if need be, to make a catalyst, adsorbent or molecular sieve.

In accordance with the invention, it is possible to produce zeolite $\beta$ stably and reproducibly from small quantity of tetraethylammonium compound and easily available industrial raw materials and yet under mild conditions and within a short operation time.

4

Moreover, by using seed crystals, the control of crystal diameter and shortening of synthesis time have become possible, allowing to economically provide zeolite β very useful as a catalyst, adsorbent and molecular sieve.

In the following, examples of the invention will be described.

Preparation of homogeneous phase compound of granular amorphous aluminosilicate

Into an overflow type reactor (real volume 4.8 L) in the state of stirring, an aqueous solution of sodium silicate ($SiO_2$ 130 g/L, $Na_2O$ 41.8 g/L and $Al_2O_3$ 0.05 g/L) and an aqueous solution of aluminium sulphate ($Al_2O_3$ 21.3 g/L and $SO_4$ 240 g/L) were fed concurrently at flow rates of 18.2 L/Hr and 4.5 L/Hr, respectively, and reacted under stirring to obtain a slurry-like product. At this time, the average retention time of the slurry was 12.5 minutes. Moreover, the feeding of aqueous solution of sodium silicate was microadjusted so that the pH value in reactor became 6 to 8 during the reaction and the temperature of reactor was kept 40°C.

The slurry-like product overflown from the reactor was dewatered through a Nutsche filter and then washed to obtain granular amorphous aluminosilicate A.

The $SO_4^{2-}$ ion in the granular amorphous aluminosilicate was less than 1000 ppm and the powder X-ray diffraction test showed it to be amorphous.

Further, by varying the conditions, granular amorphous aluminosilicates B, C and D were obtained.

The compositions of aqueous solution of sodium silicate and aqueous solution of aluminium sulphate, reaction conditions and compositions of granular amorphous aluminosilicates obtained at these times are shown in Table 1 and Table 2A and the molar ratios in Table 2B.

Synthesis of zeolite β

Example 1

In a 2.0 L beaker, 284 g of wet cake (water content 70 wt. %) of granular amorphous aluminosilicate A, 1.5 of solid sodium hydroxide, 3.5 g of solid potassium hydroxide and 480 g of 20 wt. % aqueous solution of tetraethylammonium hydroxide were stirred for 30 minutes to prepare a mixture of raw materials. This mixture of raw materials was placed in a 1 L autoclave and crystallized for 120 hours at 135°C under stirring at a peripheral speed of 0.8 m/sec.

The reaction product was submitted to solid-liquid separation and, after washing with warm water at 70°C, the solids were dried overnight at 110°C to obtain zeolite β.

Example 2

In a 2.0 L beaker, 295 g of wet cake (water content 72 wt. %) of granular amorphous aluminosilicate B, 0.26 g of solid sodium hydroxide, 7.45 g of solid potassium hydroxide and 497 g of 20 wt. % aqueous solution of tetraethylammonium hydroxide were stirred for 30 minutes to prepare a mixture of raw materials. The rest of the procedure was the same as in Example 1.

Example 3

The procedure of Example 1 was carried out except that 4 g of zeolite β obtained in Example 1 were added as seed crystals and the crystallization time was 48 hours.

Example 4

In a 2.0 L beaker, 237 g of wet cake (water content 60 wt. %) of granular amorphous aluminosilicate C, 1.1 g of solid sodium hydroxide, 7.4 g of solid potassium hydroxide and 554 g of 20 wt. % aqueous solution of tetraethylammonium hydroxide were stirred for 30 minutes to prepare a mixture of raw materials. The rest of the procedure was the same as in Example 1.

Example 5

In a 2.0 L beaker, 285 g of wet cake (water content 70 wt. %) of granular amorphous aluminosilicate A, 1.4 g of solid potassium hydroxide and 481 g of 20 wt. % aqueous solution of tetraethylammonium hydroxide were stirred for 30 minutes to prepare a mixture of raw materials. The rest of the procedure was the same as in Example 1.

Example 6

The procedure of Example 1 was carried out except that, to 334 g of wet cake (water content 70 wt. %) of granular amorphous aluminosilicate A, 6.3 g of solid sodium hydroxide, and 460 g of 20 wt. % aqueous solution of tetraethylammonium hydroxide were used and 4 g of zeolite β obtained in Example 1 were added as seed crystals and the crystallisation time was 48 hours.

Example 7

The procedure of Example 1 was carried out except that, to 382 g of wet cake (water content 70 wt. %) of granular amorphous aluminosilicate A, 7.1 g of solid sodium hydroxide, 229 g of pure water, 131 g of 20 wt. % aqueous solution of tetraethylammonium hydroxide were used and 4 g of zeolite β obtained in Example 1 were added as seed crystals, and the crystallization temperature was 150°C and the crystallisation time was 72 hours.

Comparative Example 1

In a 2.0 L beaker, 105.2 of wet cake (water content 46 wt. %) of granular amorphous aluminosilicate D, 1.3 g of solid sodium hydroxide, 2.3 g of solid potassium hydroxide and 641.3 g of 10 wt. % aqueous solution of tetraethylammonium hydroxide were stirred for 30 minutes to prepare a mixture of raw materials. This mixture of raw materials was placed in a 1 L autoclave and crystallized for 140 hours at 160°C under stirring at a peripheral speed of 0.8 m/sec.
The reaction product was submitted to solid-liquid separation and, after washing with warm water at 70°C, the solids were dried overnight at 110°C to obtain zeolite β.

Comparative Example 2

In a 2 L beaker, 736 g of 20 wt. % aqueous solution of tetraethylammonium hydroxide were placed and 3.1 g of sodium aluminate ($Na_2O$ 26.3 wt. %, $Al_2O_3$ 43.2 wt. %), 13.5 g of solid sodium hydroxide and 137 g of amorphous silica powder (made by Nippon Silica Kogyo K.K., trade name: Nipsil, $SiO_2$ 87.7 wt. %, $Al_2O_3$ 0.5 wt. % were mixed under stirring.
This mixture of raw materials was placed in a 1 L autoclave and crystallized for 96 hours at 150°C under stationary condition. The reaction product was submitted to solid-liquid separation and, after washing with warm water at 70°C, the solids were dried overnight at 110°C to obtain zeolite β.
The composition of the mixtures of raw materials in moles are shown in Table 3A and the molar ratios in Table 3B. The crystallizing conditions and the purity of the product by powder x-ray diffraction method in each example are shown in Table 4.

Table 1

| | | Aq. solution of sodium silicate | | | Aq. solution of aluminum sulfate | | |
|---|---|---|---|---|---|---|---|
| | $SiO_2$ g/L | $Na_2O$ g/L | $Al_2O_3$ g/L | Flow rate L/Hr | $Al_2O_3$ g/L | $SO_4$ g/L | Flow rate L/Hr |
| A | 130 | 41.8 | 0.05 | 18.2 | 21.3 | 240 | 4.5 |
| B | 130 | 41.8 | 0.05 | 18.2 | 10.8 | 256 | 4.5 |
| C | 130 | 41.8 | 0.05 | 9 | 10.8 | 256 | 2.3 |
| D | 130 | 41.8 | 0.05 | 9 | 17.2 | 247 | 2.3 |

Table 2A

| | Ave. retention time min | Temperature °C | Granular amorphous aluminosilicate (wt. %) | | | |
|---|---|---|---|---|---|---|
| | | | $Na_2O$ | $Al_2O_3$ | $SiO_2$ | Water content wet basis |
| | | | Dry basis | | | |
| A | 12.5 | 40 | 2.61 | 3.85 | 93.5 | 70 |

Table 2A (continued)

| | Ave. retention time min | Temperature °C | Granular amorphous aluminosilicate (wt. %) | | | |
|---|---|---|---|---|---|---|
| | | | $Na_2O$ | $Al_2O_3$ | $SiO_2$ | Water content wet basis |
| | | | Dry basis | | | |
| B | 12.5 | 40 | 1.56 | 1.90 | 96.7 | 72 |
| C | 30 | 40 | 1.81 | 1.98 | 96.4 | 60.5 |
| D | 30 | 60 | 2.17 | 3.13 | 94.7 | 46 |

Table 2B

| | $SiO_2/Al_2O_3$ | $M_2O/Al_2O_3$ |
|---|---|---|
| A | 41.2 | 1.10 |
| B | 86.4 | 1.12 |
| C | 82.6 | 1.10 |
| D | 51.4 | 1.14 |

Table 3A

| | | Granular salt (%) | Composition of mixture of raw materials | | | | | | Seed crystals wt. % |
|---|---|---|---|---|---|---|---|---|---|
| | | | $Na_2O$ | $K_2O$ | $R_2O$ | $Al_2O_3$ | $SiO_2$ | $H_2O$ | |
| Example | | | | | | | | | |
| | 1 | A | 1.60 | 0.80 | 10.0 | 1 | 41.2 | 991 | - |
| | 2 | B | 1.55 | 3.63 | 21.6 | 1 | 86.4 | 2200 | - |
| | 3 | B | 1.55 | 3.63 | 21.6 | 1 | 86.4 | 2200 | 0.5 |
| | 4 | C | 1.88 | 3.10 | 20.7 | 1 | 82.6 | 1817 | - |
| | 5 | A | 1.11 | 0.30 | 10.1 | 1 | 41.2 | 991 | - |
| | 6 | A | 3.09 | - | 8.3 | 1 | 41.2 | 990 | 0.5 |
| | 7 | A | 3.09 | - | 2.06 | 1 | 41.2 | 778 | 0.5 |
| Comparative example | | | | | | | | | |
| | 1 | D | 2.0 | 1.0 | 12.5 | 1 | 51.4 | 2015 | - |
| | 2 | - | 9.0 | - | 12.5 | 1 | 100 | 1700 | - |

Table 4

| | Crystallizing conditions | | | Purity of zeolite β wt. % |
|---|---|---|---|---|
| | Temperature °C | Time Hr | Pressure kgf/cm$^2$ | |
| Example | | | | |
| 1 | 135 | 120 | 18 | 100 |
| 2 | 135 | 120 | 19 | 100 |
| 3 | 135 | 48 | 8 | 98 |
| 4 | 135 | 100 | 15 | 100 |
| 5 | 135 | 120 | 16 | 100 |
| 6 | 135 | 48 | 9 | 100 |
| 7 | 150 | 72 | 7 | 98 |
| Comparative example | | | | |
| 1 | 160 | 140 | 37 | 50 |
| 2 | 150 | 96 | 30 | 98 |

Table 3B

| | | | $SiO_2/Al_2O_3$ | $M_2O/SiO_2$ | $H_2O/SiO_2$ | $R_2O/SiO_2$ |
|---|---|---|---|---|---|---|
| Example | | 1 | 41.2 | 0.058 | 24.1 | 0.243 |
| | | 2 | 86.4 | 0.060 | 25.5 | 0.250 |
| | | 3 | 86.4 | 0.060 | 25.5 | 0.250 |
| | | 4 | 82.6 | 0.060 | 22.0 | 0.250 |
| | | 5 | 41.2 | 0.034 | 24.1 | 0.245 |
| | | 6 | 41.2 | 0.075 | 24.0 | 0.201 |
| | | 7 | 41.2 | 0.075 | 18.8 | 0.050 |
| Comparative example | | 1 | 51.4 | 0.058 | 39.2 | 0.243 |
| | | 2 | 100 | 0.090 | 17.0 | 0.125 |

## Claims

1. A method for producing zeolite β comprising the steps of contacting an aqueous solution of alkali metal silicate and an aqueous solution containing aluminum at a fixed ratio thereof under stirring, under conditions of temperature of 0 to 55°C and pH of 5 to 9, separating granular amorphous aluminosilicate having molar ratios of ingredients as oxides in the following ranges:

   $SiO_2/Al_2O_3$ 10:1 to 200:1 and
   $M_2O/Al_2O_3$ 0.8:1 to 1.2:1

   (wherein M means an alkali metal), and contacting said granular amorphous aluminosilicate with alkali metal hydroxide, tetraethylammonium compound and water at molar ratios as oxides in the following ranges of:

   $SiO_2/Al_2O_3$     10:1 to 200:1,
   $M_2O/SiO_2$     0.01:1 to 1:1

...

$H_2O/SiO_2$      8:1 to 30:1

$R_2O/SiO_2$      0.05:1 to 0.7:1

(wherein R means tetraethylammonium), for 24 to 120 hours at 70 to 160°C to crystallize out the said zeolite β.

2.   Method for producing zeolite β comprising the steps of concurrently and continuously feeding an aqueous solution of alkali metal silicate and an aqueous solution containing aluminum at a fixed ratio under stirring so that the average retention time becomes 3 to 120 minutes, reacting them under conditions of temperature of 0 to 55°C and pH of 5 to 9, separating granular amorphous aluminosilicate having composition molar ratios as oxide in the range of:

$SiO_2/Al_2O_3$      10 ~ 200 and

$M_2O/Al_2O_3$      0.8 ~ 1.2

(wherein M means an alkali metal), discharging the reaction slurry at a fixed ratio, and contacting said granular amorphous aluminosilicate alkali metal hydroxide, tetraethylammonium compound and water at composition ratios in the range.

$SiO_2/Al_2O_3$      10 ~ 200,

$M_2O/SiO_2$      0.01 ~ 1,

$H_2O/SiO_2$      8 ~ 30 and

$R_2O/SiO_2$      0.05 ~ 0.7

(wherein R means tetraethylammonium), as expressed in terms of molar ratio of oxide for 24 to 120 hours at 70 to 160°C to crystallize.

3.   A method for producing zeolite β comprising the steps of concurrently and continuously feeding an aqueous solution of alkali metal silicate and an aqueous solution containing aluminium over 5 or more than 5 minutes at a fixed ratio under stirring, reacting them under conditions of temperature of 0 to 55°C and pH of 5 to 9, separating granular amorphous aluminosilicate having molar compositions ratios as oxides in the range of

$SiO_2/Al_2O_3$      10 ~ 200,

$M_2O/Al_2O_3$      0.8 ~ 1.2

and contacting said granular amorphous aluminosilicate with alkali metal hydroxide, tetraethylammonium compound and water at molar proportions as oxide in the range of

$SiO_2/Al_2O_3$      10 ~ 200,

$M_2O/SiO_2$      0.01 ~ 1,

$H_2O/SiO_2$      8 ~ 30 and

$R_2O/SiO_2$      0.05 ~ 0.7

for 24 to 120 hours at 70 to 160°C to crystallize.

4.   A method of producing zeolite β as claimed in claim 1, 2 or 3 characterised in that zeolite β in amounts of 0.01 to 10 wt. % based on the sum of granular amorphous aluminosilicate, alkali metal hydroxide and aqueous solution of tetraethylammonium compound is added as seed crystals for crystallization of the zeolite beta.

5.   A method as claimed in any one of the preceding claims characterised in that the ratio of $SiO_2/Al_2O_3$ is in the range 40:1 to 90:1.

6.   A method as claimed in any one of the preceding claims characterised in that the ratio of $M_2O/SiO_2$ is in the range 0.035:1 to 0.075:1.

7.   A method as claimed in any one of the preceding claims characterised in that the ratio of $H_2O/SiO_2$ is in the range 18:1 to 26:1.

8.   A method as claimed in any one of the preceding claims characterised in that the ratio of $R_2O/SiO_2$ is in the range 0.20:1 to 0.25:1.

**Patentansprüche**

1. Verfahren zur Herstellung von β-Zeolith, das die Schritte umfaßt:

Kontaktieren einer wäßrigen Alkalimetallsilikatlösung und einer wäßrigen Lösung, die Aluminium enthält, in einem festgelegten Verhältnis derselben unter Rühren, unter der Bedingung, daß die Temperatur 0 bis 55 °C beträgt und der pH-Wert 5 bis 9 ist,
Trennen granulären amorphen Aluminosilikats, das molare Verhältnisse von Inhaltsstoffen als Oxide in den folgenden Bereichen besitzt:

$SiO_2/Al_2O_3$   10:1 bis 200:1 und
$M_2O/Al_2O_3$   0,8:1 bis 1,2:1

(wobei M ein Alkalimetall bedeutet), und
Kontaktieren des granulären amorphen Aluminosilikats mit einem Alkalimetallhydroxid, einer Tetraethylammoniumverbindung und Wasser bei molaren Verhältnissen als Oxide in den folgenden Bereichen von:

$SiO_2/Al_2O_3$   10:1 bis 200:1,
$M_2O/SiO_2$   0,01:1 bis 1:1
$H_2O/SiO_2$   8:1 bis 30:1
$R_2O/SiO_2$   0,05:1 bis 0,7:1

(wobei R Tetraethylammonium bedeutet), 24 bis 120 Stunden lang bei 70 bis 160 °C, um β-Zeolith auszukristallisieren.

2. Verfahren zur Herstellung von β-Zeolith, das die folgenden Schritte umfaßt:

Gleichzeitiges und ununterbrochenes Zugeben einer wäßrigen Alkalimetallsilikatlösung und einer wäßrigen Lösung, die Aluminium enthält, in einem festgelegten Verhältnis unter Rühren, so daß die durchschnittliche Beibehaltungszeit 3 bis 120 Minuten beträgt,
Reagieren dieser Inhaltsstoffe unter der Bedingung, daß die Temperatur 0 bis 55 °C beträgt und der pH-Wert 5 bis 9 ist,
Trennen granulären amorphen Aluminosilikats, das molare Zusammensetzungsverhältnisse als Oxide aufweist im Bereich von:

$SiO_2/Al_2O_3$   10 - 200 und
$M_2O/Al_2O_3$   0,8 - 1,2

(wobei M ein Alkalimetall bedeutet),
Ableiten des Reaktionsbreis in einem festgelegten Verhältnis, und
Kontaktieren des granulären amorphen Aluminosilikats mit einem Alkalimetallhydroxid, einer Tetraethylammoniumverbindung und Wasser in Zusammensetzungsverhältnissen im Bereich von:

$SiO_2/Al_2O_3$   10 - 200,
$M_2O/SiO_2$   0,01 - 1,
$H_2O/SiO_2$   8 - 30 und
$R_2O/SiO_2$   0,05 - 0,7

(wobei R Tetraethylammonium bedeutet), ausgedrückt in molaren Oxidverhältnissen, 24 bis 120 Stunden lang bei 70 bis 160 °C, um zu kristallisieren.

3. Verfahren zur Herstellung von β-Zeolith, das die folgenden Schritte umfaßt:

Gleichzeitiges und ununterbrochenes Zugeben einer wäßrigen Alkalimetallsilikatlösung und einer wäßrigen Lösung, die Aluminium enthält, 5 oder mehr als 5 Minuten lang in einem festgelegten Verhältnis unter Rühren,
Reagieren der Inhaltsstoffe unter der Bedingung, daß die Temperatur 0 bis 55 °C beträgt und der pH-Wert 5 bis 9 ist,
Trennen granulären amorphen Aluminosilikats, das molare Zusammensetzungsverhältnisse als Oxide im

Bereich von

| | |
|---|---|
| $SiO_2/Al_2O_3$ | 10 - 200, |
| $M_2O/Al_2O_3$ | 0,8 - 1,2 |

aufweist, und
Kontaktieren des granulären amorphen Aluminosilikats mit einem Alkalimetallhydroxid, einer Tetraethylammoniumverbindung und Wasser bei molaren Verhältnissen als Oxide im Bereich von

| | |
|---|---|
| $SiO_2/Al_2O_3$ | 10 - 200, |
| $M_2O/SiO_2$ | 0,01 - 1, |
| $H_2O/SiO_2$ | 8 - 30 und |
| $R_2O/SiO_2$ | 0,05 - 0,7 |

24 bis 120 Stunden lang bei 70 bis 160 °C, um zu kristallisieren.

4. Verfahren zur Herstellung von β-Zeolith nach einem der Ansprüche 1, 2 oder 3, dadurch gekennzeichnet, daß β-Zeolith in Mengen von 0,01 bis 10 Gew.-%, basierend auf der Summe granulären amorphen Aluminosilikats, Alkalimetallhydroxid und wäßriger Lösung von Tetraethylammoniumverbindung, als Keimkristalle für die Kristallisierung von β-Zeolith zugegeben werden.

5. Verfahren nach einem der vorstehenden Ansprüche, dadurch gekennzeichnet, daß das Verhältnis von $SiO_2/Al_2O_3$ im Bereich von 40:1 bis 90:1 liegt.

6. Verfahren nach einem der vorstehenden Ansprüche, dadurch gekennzeichnet, daß das Verhältnis von $M_2O/SiO_2$ im Bereich von 0,035:1 bis 0,075:1 liegt.

7. Verfahren nach einem der vorstehenden Ansprüche, dadurch gekennzeichnet, daß das Verhältnis von $H_2O/SiO_2$ im Bereich von 18:1 bis 26:1 liegt.

8. Verfahren nach einem der vorstehenden Ansprüche, dadurch gekennzeichnet, daß das Verhältnis von $R_2O/SiO_2$ im Bereich von 0,20:1 bis 0,25:1 liegt.

## Revendications

1. Procédé de production de zéolite β comprenant les étapes consistant à mettre en contact une solution aqueuse de silicate de métal alcalin et une solution aqueuse contenant de l'aluminium dans un rapport fixe sous agitation, dans des conditions de température de 0 à 55°C et de pH de 5 à 9, à séparer un aluminosilicate amorphe granulaire dont les ingrédients ont des rapports molaires sous forme d'oxydes dans les plages suivantes :

| | |
|---|---|
| $SiO_2/Al_2O_3$ | 10:1 à 200:1, et |
| $M_2O/Al_2O_3$ | 0,8:1 à 1,2:1 |

(où M désigne un métal alcalin) et à mettre en contact ledit aluminosilicate amorphe granulaire avec un hydroxyde de métal alcalin, un composé de tétraéthylammonium et de l'eau dans des rapports molaires sous forme d'oxydes dans les plages suivantes :

| | |
|---|---|
| $SiO_2/Al_2O_3$ | 10:1 à 200:1, |
| $M_2O/SiO_2$ | 0,01:1 à 1:1, |
| $H_2O/SiO_2$ | 8:1 à 30:1, et |
| $R_2O/SiO_2$ | 0,05:1 à 0,7:1 |

(où R désigne du tétraéthylammonium) pendant une période de 24 à 120 heures à une température de 70 à 160°C pour obtenir par cristallisation ladite zéolite β.

2. Procédé de production de zéolite β comprenant les étapes consistant à acheminer simultanément et en continu une solution aqueuse d'un silicate de métal alcalin et une solution aqueuse contenant de l'aluminium dans un rapport fixe sous agitation de sorte que le temps de rétention moyen devienne de 3 à 120 minutes, à les faire réagir dans des conditions de température de 0 à 55°C et de pH de 5 à 9, à séparer un aluminosilicate amorphe granulaire dont la composition présente des rapports molaires sous forme d'oxydes dans les plages suivantes :

$SiO_2/Al_2O_3$     10 ~ 200, et
$M_2O/Al_2O_3$     0,8 ~ 1,2

(où M désigne un métal alcalin), à décharger la suspension réactionnelle dans un rapport fixe et à mettre en contact ledit aluminosilicate amorphe granulaire, de l'hydroxyde de métal alcalin, un composé de tétraéthylammonium et de l'eau dans des rapports de la composition qui se situent dans les plages suivantes :

$SiO_2/Al_2O_3$     10 ~ 200,
$M_2O/SiO_2$     0,01 ~ 1,
$H_2O/SiO_2$     8 ~ 30, et
$R_2O/SiO_2$     0,05 ~ 0,7

(où R désigne du tétraéthylammonium),
comme exprimé en termes de rapports molaires des oxydes, pendant une période de 24 à 120 heures à une température de 70 à 160°C pour effectuer sa cristallisation.

**3.** Procédé de production de zéolite β comprenant les étapes consistant à acheminer simultanément et en continu une solution aqueuse d'un silicate de métal alcalin et une solution aqueuse contenant de l'aluminium sur une période de 5 minutes ou plus dans un rapport fixe sous agitation, à les faire réagir dans des conditions de température de 0 à 55°C et de pH de 5 à 9, à séparer un aluminosilicate amorphe granulaire ayant des rapports molaires dans la composition sous forme d'oxydes dans les plages suivantes :

$SiO_2/Al_2O_3$     10 ~ 200, et
$M_2O/Al_2O_3$     0,8 ~ 1,2 et à mettre en contact ledit aluminosilicate amorphe

granulaire avec un hydroxyde de métal alcalin, un composé de tétraéthylammonium et de l'eau dans des proportions molaires sous forme d'oxydes dans les plages suivantes :

$SiO_2/Al_2O_3$     10 ~ 200,
$M_2O/SiO_2$     0,01 ~ 1,
$H_2O/SiO_2$     8 ~ 30, et
$R_2O/SiO_2$     0,05 ~ 0,7

pendant 24 à 120 heures à une température de 70 à 160°C pour effectuer sa cristallisation.

**4.** Procédé de production de zéolite β selon la revendication 1, 2 ou 3, caractérisé en ce que de la zéolite β en quantité de 0,01 à 10% en poids par rapport à la somme de l'aluminosilicate amorphe granulaire, de l'hydroxyde de métal alcalin et de la solution aqueuse de composé de tétraéthylammonium est ajoutée à titre de cristaux d'ensemencement pour la cristallisation de la zéolite β.

**5.** Procédé selon l'une quelconque des revendications précédentes, caractérisé en ce que le rapport $SiO_2/Al_2O_3$ se situe dans la plage de 40:1 à 90:1.

**6.** Procédé selon l'une quelconque des revendications précédentes, caractérisé en ce que le rapport $M_2O/SiO_2$ se situe dans la plage de 0,035:1 à 0,075:1.

**7.** Procédé selon l'une quelconque des revendications précédentes, caractérisé en ce que le rapport $H_2O/SiO_2$ se situe dans la plage de 18:1 à 26:1.

**8.** Procédé selon l'une quelconque des revendications précédentes, caractérisé en ce que le rapport $R_2O/SiO_2$ se situe dans la plage de 0,20:1 à 0,25:1.

Fig. 1